(19) Europäisches Patentamt

European Patent Office

Office européen des brevets

(11) **EP 4 498 208 A1**

(12) **EUROPEAN PATENT APPLICATION**

(43) Date of publication:
**29.01.2025 Bulletin 2025/05**

(21) Application number: **24190690.8**

(22) Date of filing: **24.07.2024**

(51) International Patent Classification (IPC):
**G06F 1/3231** (2019.01)    **G06F 3/01** (2006.01)
**H04W 4/42** (2018.01)

(52) Cooperative Patent Classification (CPC):
**G06F 1/3231; G06F 3/017; H04W 4/42**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023 US 202318361389**

(71) Applicant: **B/E Aerospace, Inc.**
**Winston-Salem, NC 27105 (US)**

(72) Inventors:
• **RATHOD, Vivek T.**
  **Mukilteo (US)**
• **TRIKANAD, Adwait A.**
  **Hillsboro (US)**
• **BAJEKAL, Sanjay G.**
  **Snohomish (US)**

(74) Representative: **Dehns**
**10 Old Bailey**
**London EC4M 7NG (GB)**

(54) **DETECTING HUMAN PRESENCE, POSTURE, OR GESTURES FOR CONTROLLING AIRCRAFT APPLICATIONS**

(57)      A system (600) for an aircraft application using channel state information (CSI) is disclosed. The system includes a CSI generation device, a controllable device (608), and a controller (604). The controller is configured to receive CSI data from the CSI generation device, identify one or more classification states from the CSI data associated with one or more of a human presence, a posture, or a gesture, identify an operation to be executed based on the classification state, and, responsive to identifying the operation, send a first command to the controllable device to perform the operation.

FIG.6

EP 4 498 208 A1

**Description**

**TECHNICAL FIELD**

The present disclosure relates to systems and methods for controlling aircraft applications, and more specifically, to using one or more of human presence, posture, or gestures to control aircraft applications.

**BACKGROUND**

The world is getting more connected by the day. Currently, over 4.6 billion passengers are transported by global commercial airlines and this number is set to grow to a staggering 7.8 billion by 2036. Airports and airlines are under sustained pressure to increase capacity, improve passenger experience and manage long-term traffic growth safely, cost-effectively and with less impact on the environment. It is clear that air and ground travel workflows should adapt not only to reduce costs but, importantly, to give passengers a better, human friendly and relaxed traveling experience. Over time, there is an interest for airlines to revisit customer expectations and understand them better. Advances in technology raise customer expectations vis-à-vis more powerful and hassle-free user interfaces.

**SUMMARY**

Disclosed herein is a system for controlling an aircraft application in an aircraft using channel state information (CSI). The system includes a CSI generation device; a controllable device; and a controller. The controller is configured to receive CSI data from the CSI generation device, identify one or more classification states from the CSI data associated with one or more of a human presence, a posture, or a gesture, identify an operation to be executed based on a classification state of the one or more classification states, and, responsive to identifying the operation, send a first command to the controllable device to perform the operation.

In various embodiments, the system further includes a Wi-Fi receiver. In various embodiments, the CSI generation device is the Wi-Fi receiver acting as transceiver. In various embodiments, the CSI data is provided to the controller via the Wi-Fi receiver. In various embodiments, the system further includes a Wi-Fi transmitter. In various embodiments, the CSI generation device is the Wi-Fi transmitter. In various embodiments, the CSI data is provided to the controller via the Wi-Fi transmitter. In various embodiments, the system further includes a Wi-Fi receiver and a Wi-Fi transmitter. In various embodiments, the CSI generation device is the Wi-Fi receiver and the Wi-Fi transmitter both acting as transceivers. In various embodiments, the CSI data is provided to the controller via the Wi-Fi receiver and the Wi-Fi transmitter. In various embodiments, a location of the Wi-Fi receiver and the Wi-Fi transmitter are optimized by obtaining and processing the CSI data at all possible discrete locations within the aircraft. In various embodiments, an optimized location of the Wi-Fi receiver and the Wi-Fi transmitter is used to integrate the Wi-Fi receiver and the Wi-Fi transmitter into the aircraft.

In various embodiments, the controller is configured to utilize a trained model to identify the one or more classification states associated with the one or more of the human presence, the posture, or the gesture. In various embodiments, the trained model is trained utilizing the CSI data associated with sensitive subcarriers within a communication channel of the CSI generation device. In various embodiments, the sensitive subcarriers are a subset of subcarriers of a communication channel of the CSI generation device interfered with by a passenger. In various embodiments, the controller is configured to utilize interference data to identify the operation that should be executed based on the classification state.

In various embodiments, the operation is at least one of turning on a reading light, turning off the reading light, turning on air, turning off the air, turning on a flight attendant call signal, opening a door to a storage bin, or closing the door to the storage bin. In various embodiments, the operation is controlling an infotainment system.

Also disclosed herein is a method for controlling an aircraft application in an aircraft using channel state information (CSI). The method includes receiving, by a controller, CSI data from a CSI generation device; identifying, by the controller, one or more classification states from the CSI data associated with one or more of a human presence, a posture, or a gesture; identifying, by the controller, an operation to be executed based on a classification state of the one or more classification states; and, responsive to identifying the operation, sending, by the controller, a first command to a controllable device to perform the operation.

In various embodiments, the CSI generation device is a Wi-Fi receiver acting as transceiver. In various embodiments, the CSI data is provided to the controller via the Wi-Fi receiver. In various embodiments, the CSI generation device is a Wi-Fi transmitter. In various embodiments, the CSI data is provided to the controller via the Wi-Fi transmitter. In various embodiments, the CSI generation device is a Wi-Fi receiver and a Wi-Fi transmitter both acting as transceivers. In various embodiments, the CSI data is provided to the controller via the Wi-Fi receiver and the Wi-Fi transmitter. In various embodiments, a location of the Wi-Fi receiver and the Wi-Fi transmitter are optimized by obtaining and processing the CSI data at all possible discrete locations within the aircraft. In various embodiments, an optimized location of the Wi-Fi receiver and the Wi-Fi transmitter is used to integrate the Wi-Fi receiver and the Wi-Fi transmitter into the aircraft.

In various embodiments, the method further includes utilizing, by the controller, a trained model to identify the one or more classification states associated with the one or more of the human presence, the posture, or the gesture. In various embodiments, the trained model is trained utilizing the CSI data associated with sensitive subcarriers within the communication channel of the CSI generation device. In various embodiments, the sensitive subcarriers are a subset of subcarriers of a communication channel of the CSI generation device interfered with by a passenger. In various embodiments, the method further includes utilizing, by the controller, interference data to identify the operation that should be executed based on the classification state.

In various embodiments, the operation is at least one of turning on a reading light, turning off the reading light, turning on air, turning off the air, turning on a flight attendant call signal, opening a door to a storage bin, or closing the door to the storage bin. In various embodiments, the operation is controlling an infotainment system.

The forgoing features and elements may be combined in various combinations without exclusivity, unless expressly indicated herein otherwise. These features and elements as well as the operation of the disclosed embodiments will become more apparent in light of the following description and accompanying drawings.

## BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.

FIG. 1 illustrates an aircraft and various sections within the aircraft, in accordance with various embodiments.

FIG. 2 illustrates a cabin of an aircraft, in accordance with various embodiments.

FIG. 3 illustrates a view of passenger service unit (PSU) as seen from a passenger sitting on one of the passenger seats below the PSU, in accordance with various embodiments.

FIG. 4 illustrates a view of an overhead storage bins, in accordance with various embodiments.

FIG. 5 illustrates a passenger seat including an infotainment system, according to various embodiments.

FIG. 6 illustrates a system that may be used to control in-flight services using gestures, according to various embodiments.

FIG. 7 illustrates a passenger seat with an aircraft application control system in a cabin of an aircraft, in accordance with various embodiments.

FIG. 8 illustrates a method for controlling an aircraft application using CSI data, according to various embodiments.

## DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

Detection of presence, posture, or gesture has been used to communicate human activity or intention for applications in health care, surveillance and entertainment. However, privacy considerations, lighting requirements, and intrusive characteristics of cameras have limited the use of presence, posture, and gesture in aircraft applications involving passengers.

Disclosed herein is a system and method for using Wi-Fi channel state information (CSI) from existing onboard networks to detect one or more of human presence, posture, or gesture in a non-intrusive manner i.e., without the need of additional device like sensor or camera, and protecting privacy by being imaging free. In various embodiments, transmitted CSI information as a part of Wi-Fi communication protocol is received by a receiver as CSI data. In various embodiments, the CSI data is processed to obtain sensitive CSI data using CSI data of most sensitive subcarriers. In various embodiments, principal component analysis (PCA) is used to identify sensitive CSI data. In various embodiments, sensitive CSI data associated with the sensitive subcarriers is the data that is most sensitive to presence, postures, or gestures of a particular passenger which may reduce data size. In various embodiments, the sensitive CSI data is extracted and structured for neural network training. A neural network trained for classification of human presence, posture, or gesture analyzes the CSI data to identify information associated with a presence, posture, or gesture of a particular passenger.

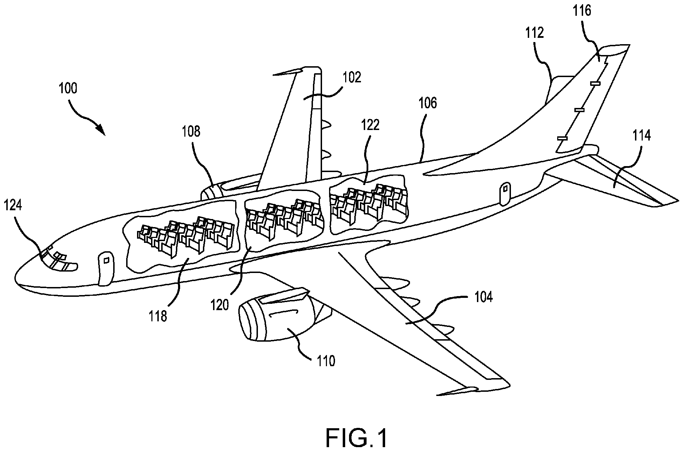

Referring now to FIG. 1, in accordance with various embodiments, an aircraft 100 and various sections within the aircraft is illustrated. The aircraft 100 is an example of a passenger or transport vehicle in which gesture-controlled systems may be implemented in accordance with various embodiments. In various embodiments, the aircraft 100 has a starboard wing 102 and a port wing 104 attached to a fuselage 106. In various embodiments, the aircraft 100 also includes a starboard engine 108 connected to the starboard wing 102 and a port engine 110 connected to the port wing 104. In various embodiments, the aircraft 100 also includes a starboard horizontal stabilizer 112, a port horizontal stabilizer 114, and a vertical stabilizer 116. In various embodiments, the aircraft 100 also includes various cabin sections, including, for example, a first cabin section 118, a second cabin section 120, a third cabin section 122, and a pilot cabin 124.

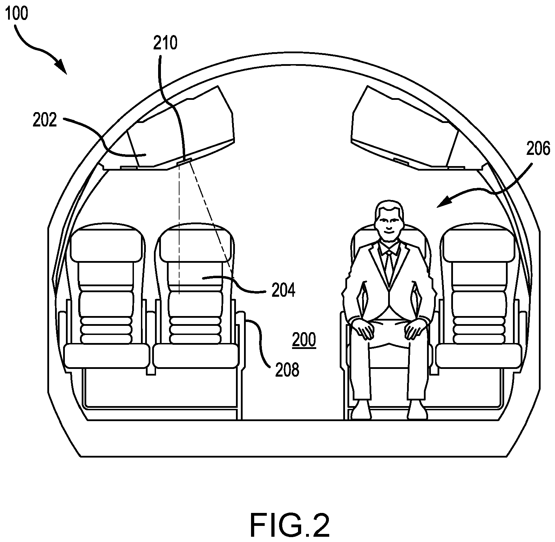

Referring now to FIG. 2, in accordance with various embodiments, a cabin of an aircraft 100 is illustrated. Cabin 200 may be a cabin such as the first cabin section 118, the second cabin section 120, or the third cabin section 122 of FIG. 1. In various embodiments, the cabin 200 may include overhead storage bins 202, passenger seats 204 for supporting passengers 206, armrest 208, lavatory surfaces, PEDs, and other structures/surfaces. In various embodiment, the cabin 200 may include passenger service units (PSUs) 210 that control various functions for passengers in the cabin 200, such as reading lighting, air conditioning, and a flight attendant call signal.

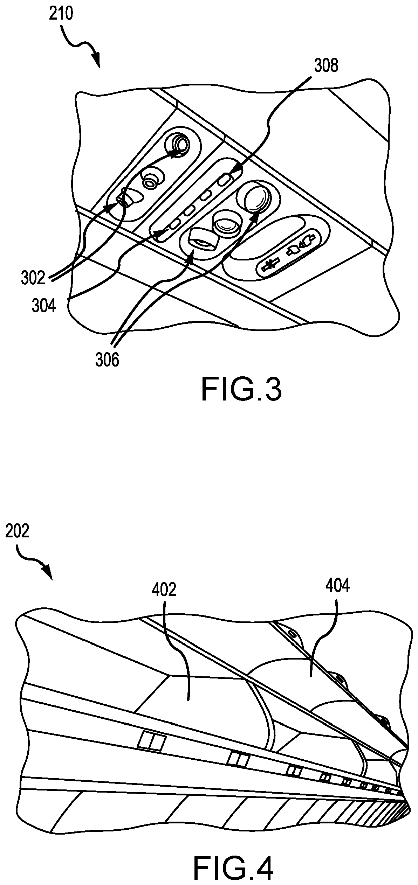

Referring now to FIG. 3, in accordance with various embodiments, a view of passenger service unit (PSU) as seen from a passenger sitting on one of the passenger seats below the PSU is illustrated. In various embodiments, the PSU 210 includes a row of three adjacent aircraft passenger cabin gaspers 302, hereinafter referred to as "gaspers" 302. In various embodiments, the gaspers 302 are configured for blowing air towards the passengers, sitting on the passenger seats below the PSU 210. In various embodiments, the gaspers 302 have circular or nearly circular cross-sections. In various embodiments, the gaspers 302 in particular have a circular outlet for delivering air towards the passengers. In various embodiments, electrical switches 304 are provided next to reading lights 306. In various embodiments, each electrical switch of the electrical switches 304 is configured for switching an adjacent and associated reading light of reading lights 306, which is arranged next to the electrical switches 304 on the side opposite to the gaspers 302. In various embodiments, switch 308 is a call button for triggering a signal for calling flight attendant personnel.

Referring now to FIG. 4, in accordance with various embodiments, a view of an overhead storage bins 202 of FIG. 2 is illustrated. In various embodiments, the overhead storage bins 202 in one or more of the various cabin sections, such as the first cabin section 118, the second cabin section 120, or the third cabin section 122 of FIG. 1, may include one or more of the walls 402 and a door 404 that form the overhead storage bins 202. In various embodiments, the door 404 may be in a closed position, as is illustrated with regard to overhead storage bins 202 of FIG. 2, or in an open position, as is illustrated with regard to door 404 in FIG. 4.

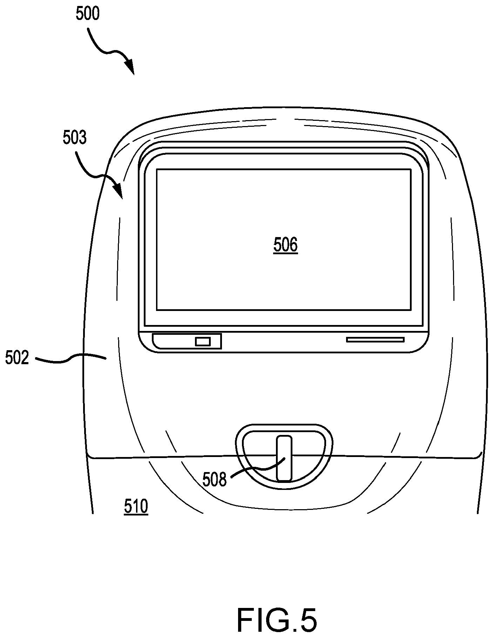

Referring now to FIG. 5, in accordance with various embodiments, a passenger seat including an infotainment system is illustrated. In various embodiments, the passenger seat 500, such as passenger seats 204 of FIG. 2, includes a seat back 502 with a seat assembly 503 onto which an infotainment system 506 may be located. In various embodiments, the infotainment system 506 is disposed proximate a latch 508. "Proximate" as disclosed herein refers to being spaced apart from, in accordance with various embodiments. The latch 508 may be configured to release a tray 510, in accordance with various embodiments. In this regard, latch 508 may retrain the tray 510 in a closed state in response to the latch 508 being in a first position as illustrated. In various embodiments, by rotating the latch 508, the tray 510 may be released and transition into an open state. Although illustrated as being configured to rotate, the latch 508 is not limited in this regard. For example, the latch 508 could include a push release, an automated release, or the like.

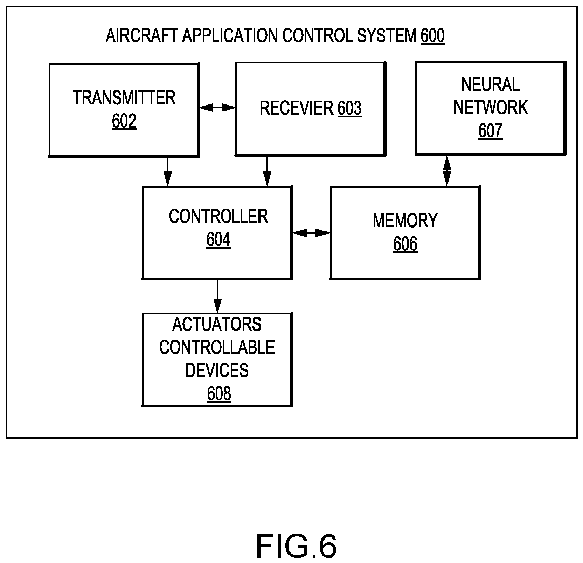

Referring now to FIG. 6, in accordance with various embodiments, a system that may be used to control aircraft applications using at least one of presence, posture, or gesture is illustrated. In various embodiments, the aircraft applications may include turning a reading light on or off, turning the air-conditioning on or off, calling for assistance of a flight attendant, opening or closing a door to an overhead storage bin, or controlling an infotainment system, among others. The aircraft application control system 600 may include a channel state information (CSI) generation device, such as a Wi-Fi transmitter 602 or a Wi-Fi receiver 603; a controller 604; a memory 606; a neural network 607; and a one or more actuators/controllable devices 608. In various embodiments, the Wi-Fi transmitter 602 and the Wi-Fi receiver 603 include provide channel state information (CSI), which is channel property information of a communication link between the Wi-Fi transmitter 602 and the Wi-Fi receiver 603. In various embodiments, the CSI information describes how a signal propagates from the Wi-Fi transmitter 602 to the Wi-Fi receiver 603 and, if the Wi-Fi transmitter 602 and the Wi-Fi receiver 603 are both configured as transceivers, how the signal propagates from the Wi-Fi receiver 603 to the Wi-Fi transmitter 602. In various embodiments, the CSI information represents a combined effect of, for example, scattering, fading, and power decay, among others, with distance. In various embodiments, within the Wi-Fi frequency bands that are utilized by the Wi-Fi transmitter 602 and the Wi-Fi receiver 603 there are smaller bands referred to as Wi-Fi channels. A Wi-Fi channel is the medium through which the Wi-Fi transmitter 602 and the Wi-Fi receiver 603 send and receive data. For example, for Wi-Fi transmitters and Wi-Fi receivers produced in the U.S., the 2.4 GHz band has 11 channels, and the 5 GHz band has 45 channels. The devices communicate through any one channel (carrier) which for example can have 64 available subcarriers that include data, pilot, and null subcarriers for IEEE 802.11n standards that report on the CSI to OFDM subcarriers over 20-MHz bandwidth mode.

In various embodiments, the controller 604 may include a logic device such as one or more of a central processing unit (CPU), an accelerated processing unit (APU), a digital signal processor (DSP), a field programmable gate array (FPGA), an application specific integrated circuit (ASIC), or the like. In various embodiments, the controller 504 may further include any non-transitory memory known in the art. The memory may store instructions usable by the logic device to perform operations as described herein.

In various embodiments, the controller 604 may be electrically and communicatively coupled to the Wi-Fi transmitter 602 and the Wi-Fi receiver 603 and may be configured to receive the CSI data from the Wi-Fi transmitter 602 and/or the Wi-Fi receiver 603. In that regard, in various embodiments, the controller 604 receives the CSI data from the Wi-Fi receiver 603 as CSI Receiver (CSIR) data when the Wi-Fi transmitter 602 transmits and the Wi-Fi receiver 603 receives the signal and receives the CSI data from the Wi-Fi transmitter 602 as CSI Transmitter (CSIT) data when the Wi-Fi receiver 603 transmits and the Wi-Fi transmitter 602 receives the signal. That is, in various embodiments, the Wi-Fi transmitter 602 and the Wi-Fi receiver 603 may both configured as transceivers, such that either one of the Wi-Fi transmitter 602 or the Wi-Fi receiver 603 may transmit a signal while the other one of the Wi-Fi transmitter 602 or the Wi-Fi receiver 603 receives the signal. Accordingly, in various embodiments, the CSI data may be composed of CSIR data and/or CSIT data as required.

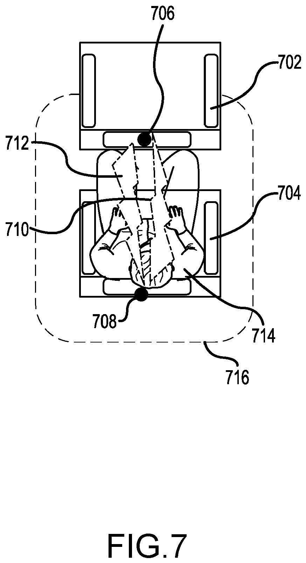

With temporary reference to FIG. 7, in accordance with various embodiments, a passenger seat with an aircraft application control system in a cabin of an aircraft is illustrated. In various embodiments, the aircraft incudes a first passenger seat 702 and a second passenger seat 704. In various embodiments, a Wi-Fi transmitter 706, such as Wi-Fi transmitter 602 of FIG. 6, is located in an upper portion of the seat back of the first passenger seat 702. In various embodiments, a Wi-Fi receiver 708, such as Wi-Fi receiver 603 of FIG. 6, is located in an upper portion of the seat back of the second passenger seat 704. In various embodiments, CSIR data 710 is generated when the Wi-Fi transmitter 706 transmits and the Wi-Fi receiver 708 receives the signal. In various embodiments, CSIT data 712 is generated when the Wi-Fi receiver 708 transmits and the Wi-Fi transmitter 706 receives the signal. In various embodiments, when passenger 714 occupies the space between the Wi-Fi transmitter 706 and the Wi-Fi receiver 708, the signal that is transmitted may be interfered with by the passenger 714 thereby indicating one or more of a presence, a posture, or a gesture of the passenger 714. It is noted that the space between the Wi-Fi transmitter 706 and the Wi-Fi receiver 708 and the second passenger seat 704 may be referred to as a confined space 716.

Returning now to FIG. 6, in various embodiments, the controller 604 may identify an optimized location for the Wi-Fi receiver 603 and/or Wi-Fi transmitter 602. In various embodiments, time series CSI data involves the time stamped CSI data received from the Wi-Fi receiver 603 and/or the Wi-Fi transmitter 602. In various embodiments, using real *Re* (amplitude) and imaginary *Im* (phase) parts of the CSI, the controller 604 estimates an absolute amplitude

$$|CSI| = \sqrt{Re^2 + Im^2}$$

. In various embodiments, estimating the absolute amplitude enables merging of phases as well as representing the data in more compact form as the data size may be reduced by half. In various embodiments, the optimized location for the Wi-Fi receiver 603 and/or the Wi-Fi transmitter 602 is found within all possible discrete locations within the controller or any other device by estimating a total (T) received signal strength

$$CSI_T = \sum_{k=0}^{K} |CSI|$$

over all subcarrier data $k = 0{:}K$ at all possible discrete receiver and/or transmitter locations $p = 0{:}P$ without human presence and selecting a location with its maximum value max $(CSI_T(p))$. The Wi-Fi transmitter 602 and/or the Wi-Fi receiver 603 are placed at the optimized location.

In various embodiments, with the Wi-Fi transmitter 602 and/or the Wi-Fi receiver 603 placed at optimized location, once the controller 604 receives the CSIR data and/or the CSIT data, the controller identifies one or more sensitive CSI data within the CSIR data and/or the CSIT data. In various embodiments, a sensitive CSI data is data corresponding to subcarriers identifying a highest response, i.e., the subcarriers that are being interfered with most by a passenger on the aircraft between the Wi-Fi transmitter 602 and the Wi-Fi receiver 603. In that regard, as a passenger occupies a space and/or provides gesture between the Wi-Fi transmitter 602 and the Wi-Fi receiver 603 and either the Wi-Fi transmitter 602 transmits to the Wi-Fi receiver 603 or the Wi-Fi receiver 603 transmits to the Wi-Fi transmitter 602, the signal that is transmitted is interfered with by the passenger indicating one or more of a presence, a posture, or a gesture. In various embodiments, the controller 604 identifies some of the most sensitive CSI data within the CSIR data and/or the CSIT data in order to identify the presence, the posture, or the gesture of the passenger.

In various embodiments, the controller 604 extracts and structures sensitive CSI data from the main CSI data for neural network training. In various embodiments, the controller 604 utilizes principal component analysis (PCA) to identify one or more sensitive CSI data, i.e. data columns corresponding to subcarriers indicating interference with by a passenger due to a presence, posture, and/or gesture of the passenger thereby reducing a size of the CSI data. In various embodiments, the controller 604 may average dominant channel data over time with a number of samples and saved in memory 606 in the form of a matrix or an array where columns represent time series data corresponding to the extracted sensitive CSI data 'n'. In that regard, in various embodiments, the time series CSI data of length $q=0... Q$ in time for sensitive subcarrier numbers $k=0:K$ as columns in matrix form at a location $p=p_o$ with real $Re$ and imaginary $Im$ parts is arranged as:

$$[CSI(t,p_o)] = \begin{bmatrix} Re_{0,0} & .. & Re_{0,K} & Im_{0,0} & .. & Im_{0,K} \\ : & : & : & : & : & : \\ Re_{Q,0} & .. & Re_{Q,K} & Im_{Q,0} & .. & Im_{Q,K} \end{bmatrix}$$

In various embodiments, an absolute value of time series CSI data $|CSI|$ in matrix form at a particular combination of receiver and/or transmitter location $p=p_o$ is:

$$[|CSI|(t,p_o)] = \begin{bmatrix} |CSI|_{0,0} & .. & |CSI|_{0,K} \\ : & : & : \\ |CSI|_{Q,0} & .. & |CSI|_{Q,K} \end{bmatrix}$$

Accordingly, in various embodiments, the PCA of time series data gives the subcarrier numbers (column numbers) most sensitive to all activities to be considered like human presence, postures and gestures. In various embodiment, the first $n$ most sensitive data of subcarriers are considered where $n$ is a positive integer and its value may be decided based on the desired compromise between accuracy and speed i.e., increased $n$ increases the accuracy of trained modes but increases the size of ML model and reduces the inference speed. In various embodiments, the extracted columns corresponding to sensitive subcarrier (column) numbers in the CSI data, a total $n$ out of total number of channels $K$ from $|CSI|$ matrix, at optimized transmitter and receiver location $p = p_o$, is arranged in matrix form as"

$$[|CSI|_D(t,p_o)] = \begin{bmatrix} |CSI|_{0,0} & .. & |CSI|_{0,n} \\ : & : & : \\ |CSI|_{Q,0} & .. & |CSI|_{Q,n} \end{bmatrix}$$

In various embodiments, neural network 607 operates on the matrix or array of sensitive CSI data from the controller 604 in memory 606 in order to generate a model that classifies human presence, postures, and/or gestures. In that regard, neural network 607 receives as input the sensitive CSI data from all columns over a predetermined time period t utilizing m samples to classify human presence, postures, and/or gestures. In various embodiments, the neural network 607 then outputs a model with a set of classification states identifying one or more of human presence, postures, and gestures. In various embodiments, the model may then be converted to an open standard form, such as Open Neural Network Exchange (ONNX) or TensorFlow™, in order to access hardware optimizations. In various embodiments, the open standard form may then be converted using a full integer quantization-based conversion resulting in trained model that is stored in memory 606 and may be utilized by the controller 604.

In various embodiments, the controller 604 may utilize the trained model along with an interference data. As an example of the Orthogonal Frequency Division Multiplexing (OFDM) based CSI generation device, the CSI data may consist of information like phase and amplitude of subcarriers withing the communication channel (carrier). Such CSI data in matrix form may include of amplitude of each subcarrier in each column with rows including of their variation with time. Real (amplitude) and imaginary (phase) data for each subcarrier may be in separate columns. CSI data may change if the location of device changes due to new path established by the subcarriers for their locations. CSI data of subcarriers are different due to their different frequencies. In a case when a person or object comes in a path of a subcarrier, the phase and amplitude of the subcarrier of that path changes, thereby changing the value of CSI data associated with that subcarrier. In various embodiments, the interference data provides a correlation of the set of classification states identifying one or more of human presence, postures, and gestures, to an operation that may be performed associated with an identified one a classified human presence, posture, or gesture. In that regard, in various embodiments, the controller 604 receives real time CSI data, in the form of CSIR data and/or CSIT data, from the Wi-Fi receiver 603 and/or the Wi-Fi transmitter 602. In various embodiments, the controller 604 processes real time CSI data utilizing the trained model to classify a human presence, posture, and/or gesture. In various embodiments, responsive to classifying a human presence, posture, and/or gesture as per the trained model, the controller 604 correlates the classified human presence, posture, and/or gesture to an operation in the interference data. In various embodiments, upon identifying an operation associated with the classified human presence, posture, and/or gesture, the controller 604 is configured to issue a command to one or more of actuators/controllable devices 608 thereby controlling a device in the aircraft such as a reading light, a gaspers, a flight attendant call signal, a door to the overhead storage bin, or an infotainment system, among others. In various embodiments, the aircraft application control system 600 provides an improvement over typical control systems as the aircraft application control system 600 does not require lighting and is negligibly susceptible to interference at any radio frequencies as the aircraft application control system 600 operates with a distinct communication protocol.

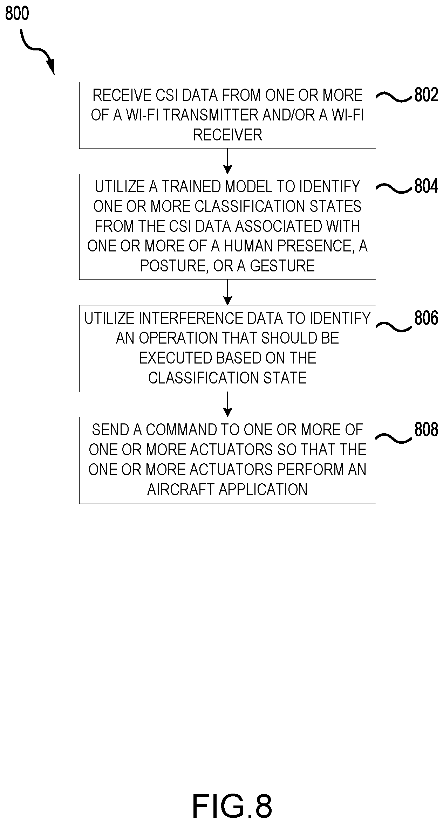

Referring now to FIG. 8, in accordance with various embodiments, a method for controlling an aircraft application using CSI data is illustrated. The method 800 may be performed by a controller, such as controller 604 described above with respect to FIG. 6. At block 802, the controller may be configured to receive CSI data from one or more of a Wi-Fi transmitter and/or a Wi-Fi receiver. At block 804, the controller may be configured to utilize a trained model to identify one or more classification states from the CSI data associated with one or more of a human presence, a posture, or a gesture. At block 806, upon identifying a classification state, the controller may be configured to utilize interference data to identify an operation that should be executed based on the classification state. At block 808, based on the identified action, the controller may be configured to send a command to one or more of one or more actuators/controllable devices so that the one or more actuators/controllable devices perform an aircraft application, such as turning on a reading light, turning off the reading light, turning on air, turning off the air, turning on a flight attendant call signal, opening a door to a storage bin, closing the door to the storage bin, or controlling an infotainment system, among others.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about," or "approximately" as used herein represent an amount close to the stated amount that still performs a desired function or achieves a desired result. For example, the term "substantially," "about," or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure.

Accordingly, the description is not intended to be exhaustive or to limit the principles described or illustrated herein to any precise form. Many modifications and variations are possible in light of the above teaching.

**Claims**

1. A system for controlling an aircraft application in an aircraft using channel state information (CSI), the system comprising:

    a CSI generation device;
    a controllable device; and
    a controller, wherein the controller is configured to:

        receive CSI data from the CSI generation device;
        identify one or more classification states from the CSI data associated with one or more of a human presence, a posture, or a gesture;
        identify an operation to be executed based on a classification state of the one or more classification states; and
        responsive to identifying the operation, send a first command to the controllable device to perform the operation.

2. The system of claim 1, wherein the system further comprises:

    a Wi-Fi receiver, wherein the CSI generation device is the Wi-Fi receiver acting as a transceiver and wherein the CSI data is provided to the controller via the Wi-Fi receiver; and/or
    a Wi-Fi transmitter, wherein the CSI generation device is the Wi-Fi transmitter and wherein the CSI data is provided to the controller via the Wi-Fi transmitter.

3. The system of claim 1, wherein the system further comprises:

    a Wi-Fi receiver; and
    a Wi-Fi transmitter, wherein the CSI generation device is the Wi-Fi receiver and the Wi-Fi transmitter both acting as transceivers and wherein the CSI data is provided to the controller via the Wi-Fi receiver and the Wi-Fi transmitter.

4. The system of claim 3, wherein a location of the Wi-Fi receiver and the Wi-Fi transmitter are optimized by obtaining and processing the CSI data at all possible discrete locations within the aircraft.

5. The system of claim 4, wherein an optimized location of the Wi-Fi receiver and the Wi-Fi transmitter is used to integrate the Wi-Fi receiver and the Wi-Fi transmitter into the aircraft.

6. The system of any preceding claim, wherein the controller is configured to utilize a trained model to identify the one or more classification states associated with the one or more of the human presence, the posture, or the gesture, wherein the trained model is trained utilizing the CSI data associated with sensitive subcarriers within a communication channel of the CSI generation device, and wherein the sensitive subcarriers are a subset of subcarriers of the communication channel of the CSI generation device interfered with by a passenger.

7. The system of any preceding claim, wherein the controller is configured to utilize interference data to identify the operation that should be executed based on the classification state.

8. The system of any preceding claim, wherein the operation is at least one of turning on a reading light, turning off the reading light, turning on air, turning off the air, turning on a flight attendant call signal, opening a door to a storage bin, or closing the door to the storage bin; and/or
wherein the operation is controlling an infotainment system.

9. A method for controlling an aircraft application in an aircraft using channel state information (CSI), the method comprising:

receiving, by a controller, CSI data from a CSI generation device;

identifying, by the controller, one or more classification states from the CSI data associated with one or more of a human presence, a posture, or a gesture;

identifying, by the controller, an operation to be executed based on a classification state of the one or more classification states; and

responsive to identifying the operation, sending, by the controller, a first command to a controllable device to perform the operation.

10. The method of claim 9, wherein the CSI generation device is a Wi-Fi receiver acting as a transceiver and wherein the CSI data is provided to the controller via the Wi-Fi receiver; and/or

wherein the CSI generation device is a Wi-Fi transmitter and wherein the CSI data is provided to the controller via the Wi-Fi transmitter.

11. The method of claim 9, wherein the CSI generation device is a Wi-Fi receiver and a Wi-Fi transmitter both acting as transceivers and wherein the CSI data is provided to the controller via the Wi-Fi receiver and the Wi-Fi transmitter.

12. The method of claim 11, wherein a location of the Wi-Fi receiver and the Wi-Fi transmitter are optimized by obtaining and processing the CSI data at all possible discrete locations within the aircraft.

13. The method of claim 12, wherein an optimized location of the Wi-Fi receiver and the Wi-Fi transmitter is used to integrate the Wi-Fi receiver and the Wi-Fi transmitter into the aircraft.

14. The method of any of claims 9 to 13, further comprising:

utilizing, by the controller, a trained model to identify the one or more classification states associated with the one or more of the human presence, the posture, or the gesture, wherein the trained model is trained utilizing the CSI data associated with sensitive subcarriers within a communication channel of the CSI generation device and wherein the sensitive subcarriers are a subset of subcarriers of the communication channel of the CSI generation device interfered with by a passenger; and/or

utilizing, by the controller, interference data to identify the operation that should be executed based on the classification state.

15. The method of any of claims 9 to 14, wherein the operation is at least one of turning on a reading light, turning off the reading light, turning on air, turning off the air, turning on a flight attendant call signal, opening a door to a storage bin, or closing the door to the storage bin; and/or

wherein the operation is controlling an infotainment system.

FIG.1

FIG.2

FIG.3

FIG.4

FIG.5

AIRCRAFT APPLICATION CONTROL SYSTEM 600

| TRANSMITTER 602 | ↔ | RECEVIER 603 | | NEURAL NETWORK 607 |

CONTROLLER 604 ↔ MEMORY 606

ACTUATORS CONTROLLABLE DEVICES 608

# FIG.6

FIG.7

800

RECEIVE CSI DATA FROM ONE OR MORE OF A WI-FI TRANSMITTER AND/OR A WI-FI RECEIVER — 802

UTILIZE A TRAINED MODEL TO IDENTIFY ONE OR MORE CLASSIFICATION STATES FROM THE CSI DATA ASSOCIATED WITH ONE OR MORE OF A HUMAN PRESENCE, A POSTURE, OR A GESTURE — 804

UTILIZE INTERFERENCE DATA TO IDENTIFY AN OPERATION THAT SHOULD BE EXECUTED BASED ON THE CLASSIFICATION STATE — 806

SEND A COMMAND TO ONE OR MORE OF ONE OR MORE ACTUATORS SO THAT THE ONE OR MORE ACTUATORS PERFORM AN AIRCRAFT APPLICATION — 808

# FIG.8

Europäisches
Patentamt

European
Patent Office

Office européen
des brevets

# EUROPEAN SEARCH REPORT

Application Number

EP 24 19 0690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/084951 A1 (PARK UN KYU [KR]) 24 March 2016 (2016-03-24) | 1,7-9,15 | INV. G06F1/3231 |
| Y | * paragraph [0007] - paragraph [0019] * * paragraph [0029] * * paragraph [0033] - paragraph [0052] * * figures 1-6 * | 2-6, 10-14 | G06F3/01 H04W4/42 |
| Y | US 2022/124154 A1 (ZOU HAN [US] ET AL) 21 April 2022 (2022-04-21) * paragraph [0015] - paragraph [0020] * * paragraph [0036] - paragraph [0111] * * figures 1-13 * | 2-6, 10-14 | |
| A | US 2022/363393 A1 (COLMENARES SIMÓN [US]) 17 November 2022 (2022-11-17) * paragraph [0006] - paragraph [0008] * * paragraph [0016] - paragraph [0054] * * figures 1-3 * | 1-15 | |
| A | US 2020/408875 A1 (MAI CHAO-LUN [US] ET AL) 31 December 2020 (2020-12-31) * paragraph [0036] - paragraph [0040] * * paragraph [0126] * * paragraph [0172] - paragraph [0173] * * paragraph [0188] - paragraph [0189] * * paragraph [0197] - paragraph [0200] * * figures 2A-2C * | 1-15 | TECHNICAL FIELDS SEARCHED (IPC) G06F H04W |

The present search report has been drawn up for all claims

| Place of search | Date of completion of the search | Examiner |
|---|---|---|
| The Hague | 19 November 2024 | Knutsson, Frédéric |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ..................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 19 0690

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | Publication date | Patent family member(s) | Publication date |
|---|---|---|---|
| US 2016084951 A1 | 24-03-2016 | CN 105759642 A<br>DE 102014225833 A1<br>KR 20160033525 A<br>US 2016084951 A1 | 13-07-2016<br>24-03-2016<br>28-03-2016<br>24-03-2016 |
| US 2022124154 A1 | 21-04-2022 | US 2022124154 A1<br>WO 2020037313 A1 | 21-04-2022<br>20-02-2020 |
| US 2022363393 A1 | 17-11-2022 | NONE | |
| US 2020408875 A1 | 31-12-2020 | US 2020408875 A1<br>US 2022091225 A1 | 31-12-2020<br>24-03-2022 |

EPO FORM P0459

For more details about this annex : see Official Journal of the European Patent Office, No. 12/82